# EUROPÄISCHE PATENTSCHRIFT

(11) **EP 1 893 433 B1**
(45) Veröffentlichungstag und Bekanntmachung des Hinweises auf die Patenterteilung: **29.10.2014**
(21) Anmeldenummer: 06753254.9
(22) Anmeldetag: 07.06.2006
(51) Int. Cl.: B60J 7/20

(54) **CABRIOLET-FAHRZEUG MIT EINEM UNTERHALB EINER ABDECKUNG ABLEGBAREN DACH**
CONVERTIBLE WITH A ROOF WHICH CAN BE STORED BELOW A COVERING
AUTOMOBILE DECAPOTABLE DOTEE D'UN TOIT DEPOSE SOUS LE HAYON

(30) Priorität: 08.06.2005 DE 102005026281
(43) Veröffentlichungstag der Anmeldung: 05.03.2008
(73) Patentinhaber: Valmet Automotive Oy, 23500 Uusikaupunki (FI)
(72) Erfinder: BROCKHOFF, Franz-Ulrich, 49565 Bramsche (DE)
(74) Vertreter: Kronthaler, Schmidt & Coll.
(86) Internationale Anmeldenummer: PCT/DE2006/000981
(87) Internationale Veröffentlichungsnummer: WO 2006/131100

(56) Entgegenhaltungen:
- WO-A2-2005/007428
- DE-A1- 10 107 079
- DE-B3- 10 340 017
- US-A1- 2004 222 658
- PATENT ABSTRACTS OF JAPAN Bd. 2000, Nr. 11, 3. Januar 2001 (2001-01-03) -& JP 2000 211373 A (TAKADA KOGYO KK), 2. August 2000 (2000-08-02)

## Beschreibung

Die Erfindung betrifft ein Cabriolet-Fahrzeug mit einem im rückwärtigen Fahrzeugbereich unterhalb einer in zwei Öffnungssinnen beweglichen Abdeckung ablegbaren Dach nach dem Oberbegriff des Anspruchs 1.

Um eine Ablage des Daches unter einer beweglichen Ablage zu ermöglichen, ist es bekannt, der Abdeckung, etwa einem Deckelteil, eine Erweiterung zuzuordnen, die bei geöffnetem Dach den Raum zwischen der Vorderkante der Abdeckung und dem Insassenraum überdeckt und optisch abschließt.

Die DE 199 43 860 B4 zeigt als Abdeckung ein in zwei Öffnungssinnen aufbewegliches Deckelteil, unter dem eine nach vorne ausschwenkbare, plattenförmige Erweiterung gehalten ist, die bei geöffnetem Dach die Abdeckung nach vorne hin fluchtend fortsetzt. Dadurch ergibt sich in dieser Stellung eine sehr große Längserstreckung des zusammengesetzten Plattenteils, was bei bestimmten Fahrzeuggeometrien problematisch sein kann. Für eine angenehme Optik muß bei einer solchen Auslegung die Breite der Erweiterung sich in die Breite der Abdeckung einfügen.

Der Erfindung liegt das Problem zugrunde, bei einem gattungsgemäßen Cabriolet-Fahrzeug hier eine Verbesserung zu erreichen.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 10 verwiesen.

Erfindungsgemäß ist die Größe der zu bewegenden Baugruppe bei Öffnung des Kofferraums verringert, da hierbei nur die Abdeckung an sich, nicht jedoch die bei geöffnetem Dach fluchtend davor liegende Erweiterung zu bewegen ist. Es muß daher nur ein kleinerer und leichterer Teil bewegt werden. Die Breite der Erweiterung kann unabhängig von der Breite der Abdeckung gewählt werden, wodurch die Flexibilität in der Gestaltung erheblich erweitert ist.

Insbesondere ist es vorteilhaft, wenn die Erweiterung nicht an der Abdeckung selbst, sondern an seitlichen Gestähgeteilen gehalten ist, die unterhalb der Ebene der Abdeckung angeordnet und zur Freigabe der Durchtrittsöffnung für das Dach mit der Abdeckung beweglich sind und die zur Freigabe der Beladeöffnung für Gepäck in Ruhestellung verbleiben. Damit ergibt sich ohne weitere Steuerungs- oder Antriebsmaßnahmen die Mitbewegung der Erweiterung mit der Abdeckung, wenn diese zur Freigabe der Durchtrittsöffnung für das Dach aufschwenkt, wohingegen die Erweiterung in im wesentlichen horizontaler Ruhestellung verbleibt, wenn die Abdeckung gegensinnig zur Freigabe des Kofferraumzugangs öffnet.

Für eine konstruktiv einfache und platzsparende Anordnung der seitlich und längs im Fahrzeug liegenden Gestängeteile sind diese Bestandteil von Mehrgelenkkinematiken, zum Beispiel Fünf- oder Siebengelenken.

Vorteilhaft können solche Mehrgelenkkinematiken vorgesehen sein, bei denen in jedem Öffnungssinn jeweils zumindest ein Gelenk, und zwar je nach Öffnungssinn ein anderes, blockiert ist. Die Gestängeteile können jedoch auch längs im Fahrzeug liegende Seitenteile eines Hilfsrahmens bilden, der zum Beispiel über ein Querrohr im hinteren Bereich zu einer durchgehenden Baueinheit verbunden ist.

Sofern die Abdeckung bezüglich der Fahrzeugquerrichtung einen mittleren Teil und seitlich gelegene Außenteile umfaßt, die bei geschlossenem Dach gegenüber dem Mittelteil in eine nach unten weisende Lagerstellung eingeklappt sind, kann eine schmale Ausdehnung der Abdeckung und dennoch eine breite Erweiterung verwirklicht werden, was insbesondere im Zusammenhang mit einer Verschmälerung des Daches während seiner Öffnung einhergehen kann.

Die Erfindung ist insbesondere auch kombinierbar mit einem Fahrzeug, das feste Dachteile umfaßt und seitlich des Rückfensters gelegene Dachsäulen während der Dachöffnung um zumindest im wesentlichen parallel zu den Seitenkanten des Rückfensters gelegene Achsen einschwenkbar sind, so daß sich dadurch das Dach während seiner Öffnung verschmälert und die Abdeckung schmaler sein kann als das geschlossene Dach. Dennoch kann die vorgeordnete Erweiterung eine gegenüber der Abdeckung größere Breite haben und somit auch die gegenüber der Abdeckung weiter außen liegenden Seiten des Raumes zwischen dem Insassenraum und der Abdeckung optisch verschließen. Die Breite der Abdekkung kann trotzdem optisch elegant gering gehalten werden.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:

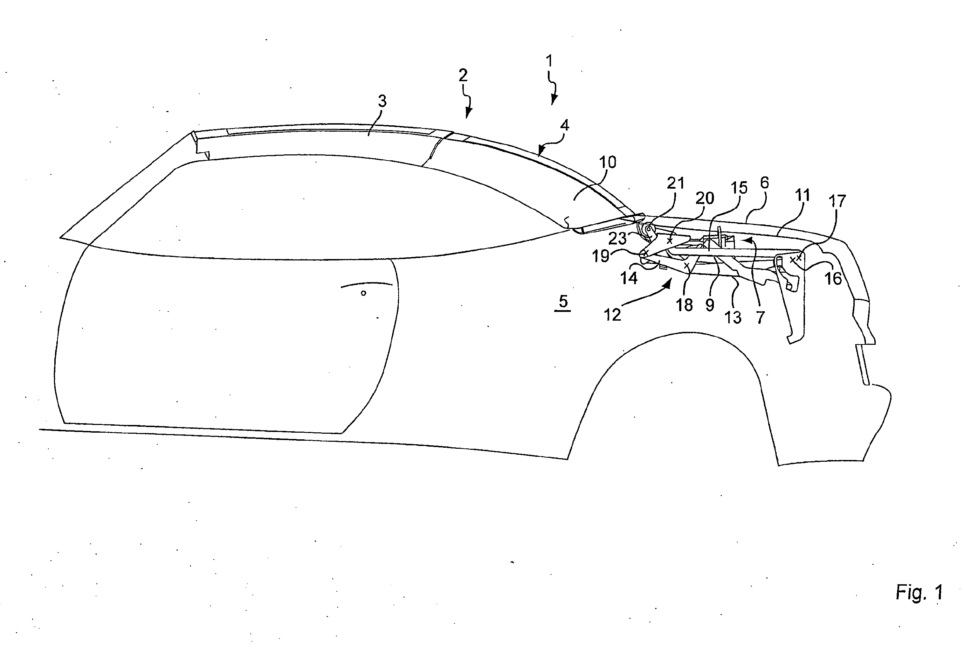

- Fig. 1: eine im vorderen Teil abgebrochene, schematische Seitenansicht eines erfindungsgemäßen Cabriolet-Fahrzeugs bei geschlossenem Dach und geschlossener hinterer Abdeckung,
- Fig. 2: eine Einzelteilansicht des Daches und der Abdekkung in Stellung nach Fig. 1,
- Fig. 3: eine ähnliche Ansicht wie Fig. 2 bei noch geschlossenem Dach und im Öffnungssinn zur Freigabe der Durchtrittsöffnung für das Dach aufgeschwenkter Abdeckung mit darunter eingeschwenkter Erweiterung,
- Fig. 4: eine ähnliche Ansicht wie Fig. 3 während der beginnenden Dachöffnung und dadurch beginnenden Ausschwenkens der Erweiterung,
- Fig. 5: eine ähnliche Ansicht wie Fig. 4 während der weiter fortschreitenden Dachöffnung und weiter ausschwenkender Erweiterung,
- Fig. 6: eine ähnliche Ansicht wie Fig. 5 mit vollständig geöffnetem Dach während des Schließens der Abdeckung bei ausgeschwenkter Erweiterung,
- Fig. 7: eine ähnliche Ansicht wie Fig. 6 mit vollständig geöffnetem Dach und darüber geschlossener Abdekkung bei ausgeschwenkter Erweiterung,
- Fig. 8: eine Ansicht von hinten auf das geschlossene Dach und die geschlossene Abdeckung in Stellung nach Fig. 2,

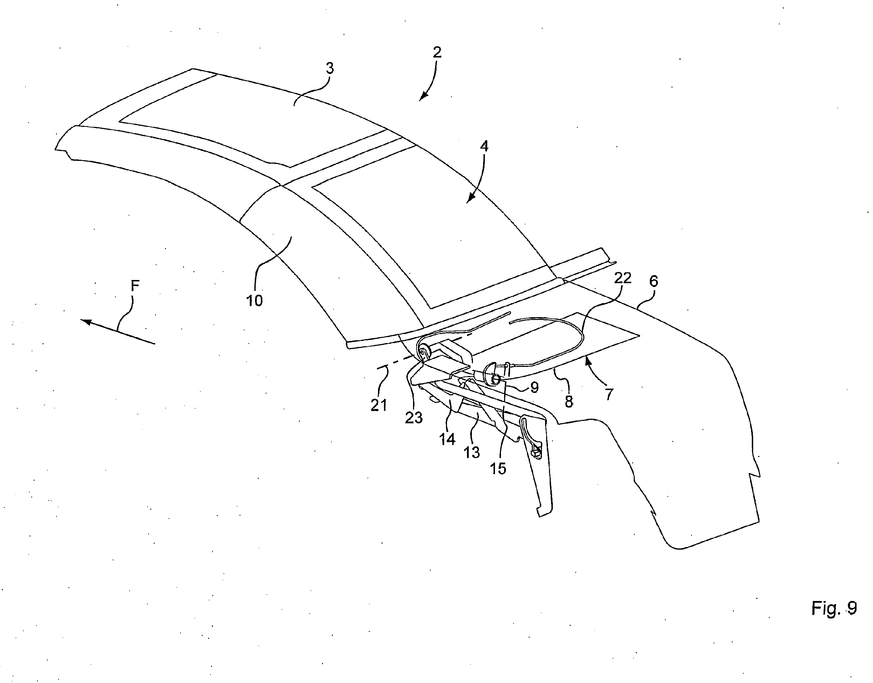

- Fig. 9: eine perspektivische Ansicht auf das Fahrzeug von schräg hinten bei geschlossenem Dach und geschlossener - hier transparent eingezeichneter - Abdeckung,

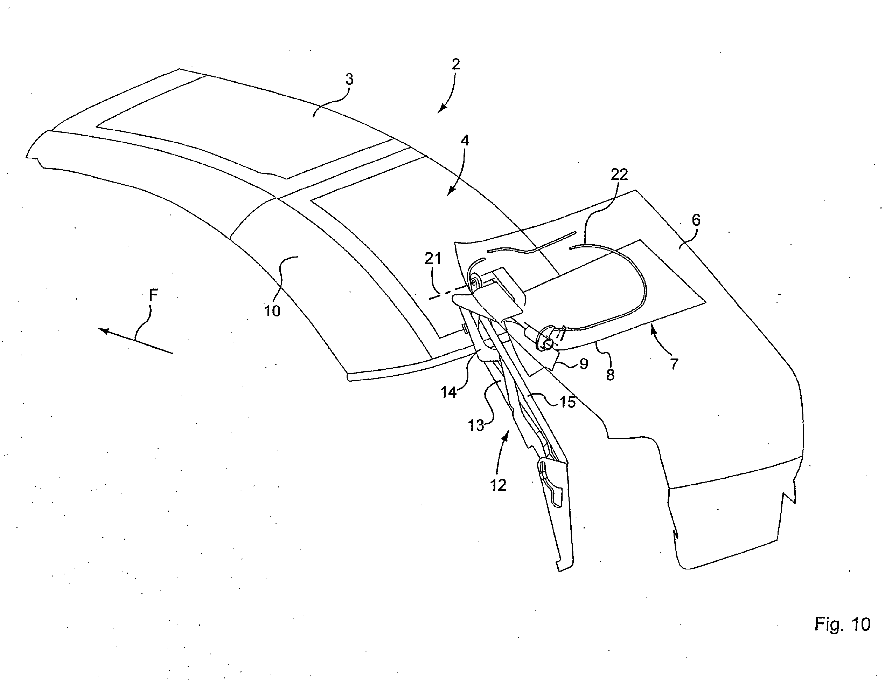

- Fig. 10: eine ähnliche Ansicht wie Fig. 9 in Stellung etwa nach Fig. 3,
- Fig. 11: eine ähnliche Ansicht wie Fig. 9 in Stellung etwa nach Fig. 4,
- Fig. 12: eine ähnliche Ansicht wie Fig. 9 in Stellung etwa nach Fig. 5,
- Fig. 13: eine ähnliche Ansicht wie Fig. 12 bei weiterer Dachöffnung,
- Fig. 14: eine ähnliche Ansicht wie Fig. 9 bei vollständig geöffnetem Dach und darüber geschlossener Abdekkung in Stellung etwa nach Fig. 7,
- Fig. 15: eine ähnliche Ansicht wie Fig. 14 in einer mit zur Freigabe einer Beladeöffnung für Gepäck geöffneten Abdeckung,
- Fig. 16: eine ähnliche Ansicht wie Fig. 15 mit zusätzlich eingezeichnetem oberem Seitenteil,
- Fig. 17: eine ähnliche Ansicht wie Fig. 16 bei jedoch abgelegtem, geöffnetem Dach und im wesentlichen horizontal vor der Abdeckung liegender Erweiterung,
- Fig. 18: eine Seitenansicht des abgelegten Daches und darüber zur Freigabe der Kofferraumöffnung geöffneter Abdeckung in Stellung nach Fig. 17.

Das in der Zeichnung nur teilweise dargestellte Cabriolet-Fahrzeug 1 umfaßt ein bewegliches Dach 2, das hier mehrere in sich starre Dachteile 3, 4 umfaßt, was nicht zwingend ist. In seinem geöffneten Zustand ist es im heckwärtigen Karosseriebereich ablegbar. Am Fahrzeug 1 ist im Ausführungsbeispiel ein großer hinterer Teil der Durchtrittsebene des Daches 2 durch die Oberseite der Karosserie 5 von einer beweglichen Abdeckung '6, die in Kombination als Verdeckkastendeckel und Kofferraumdeckel wirkt, abdeckbar.

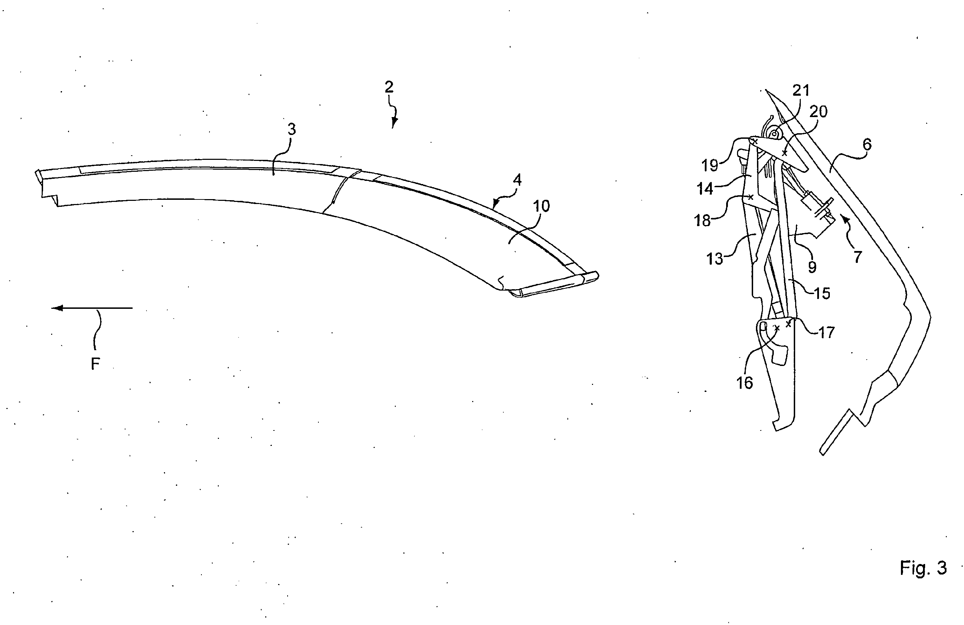

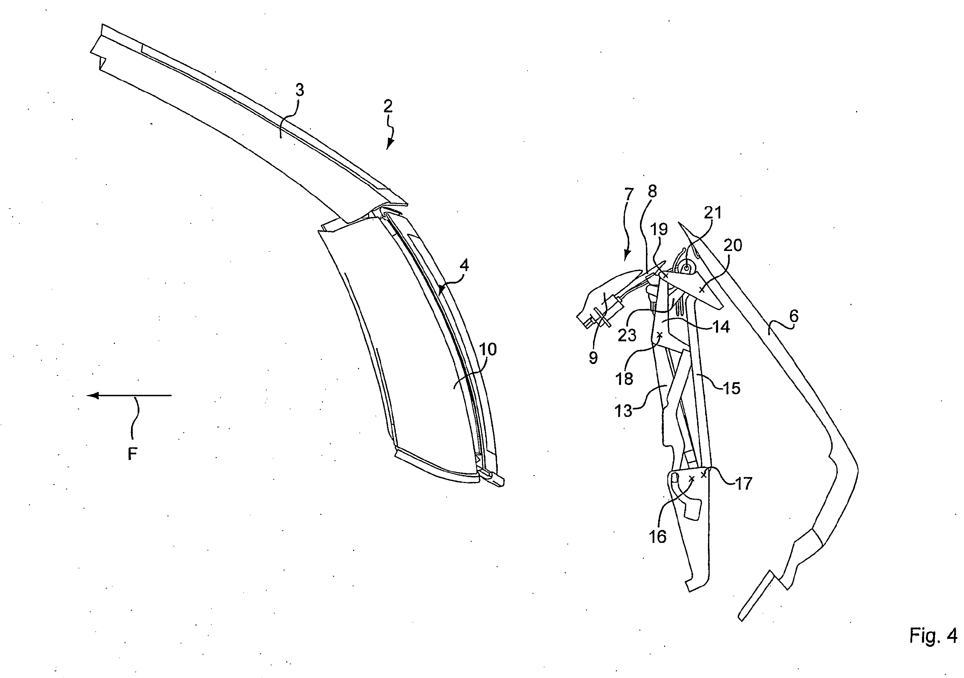

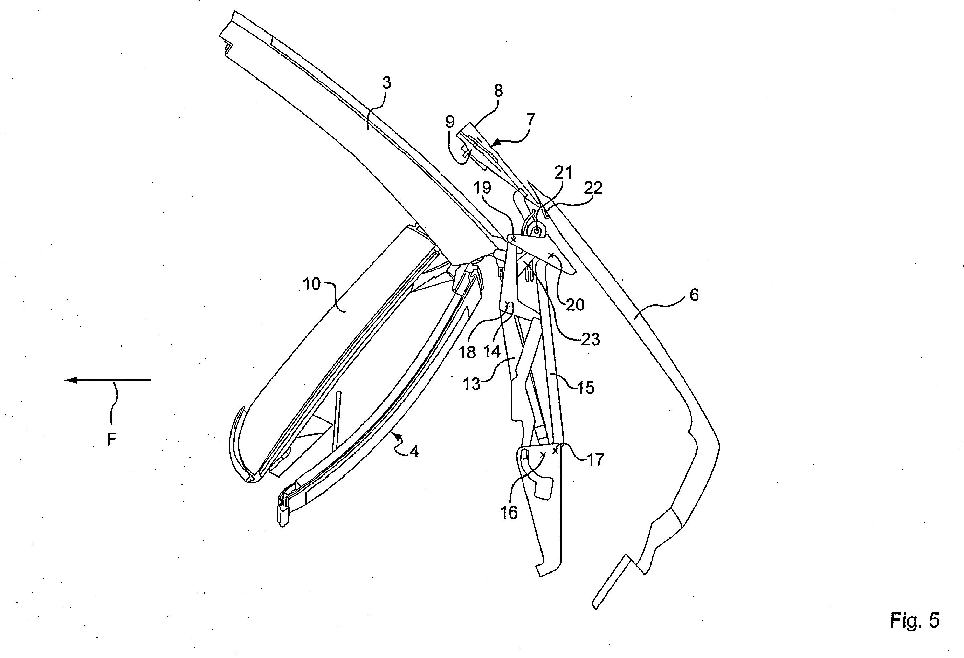

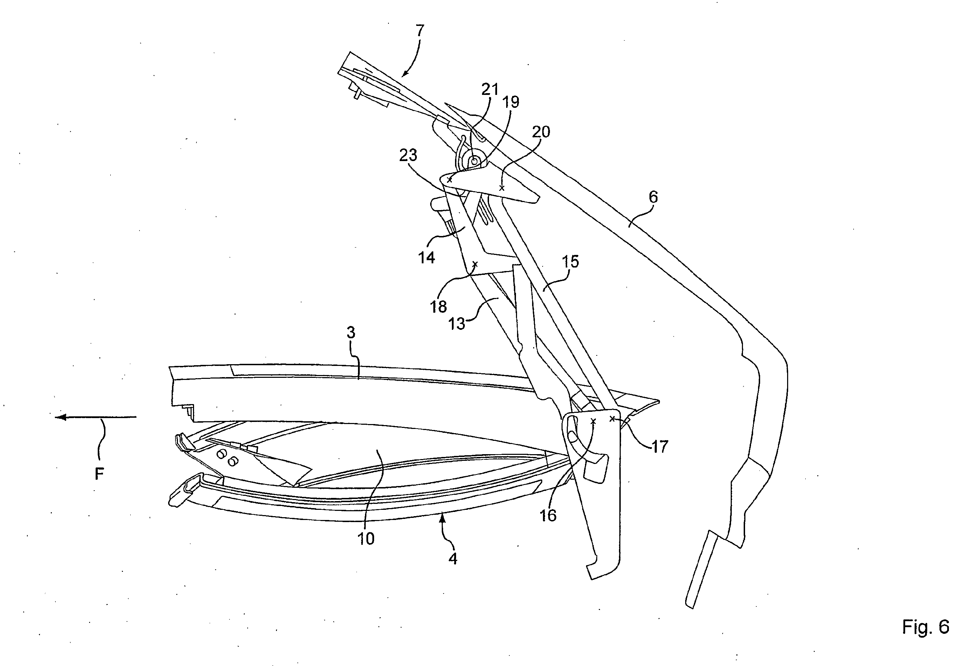

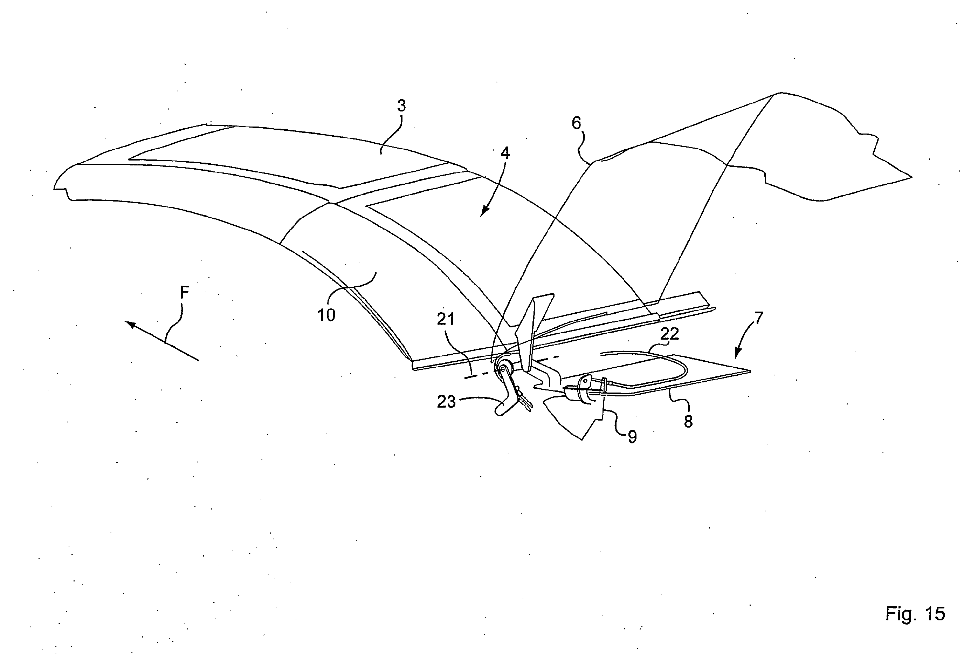

Die Abdeckung 6 kann in einem ersten Öffnungssinn nach hinten zur Freigabe einer Durchtrittsöffnung für das Dach (Fig. 3 bis Fig. 6) und in einem zweiten Öffnungssinn nach vorne zur Freigabe einer Beladeöffnung für Gepäck, also wie eine übliche Kofferraumklappe (Fig. 15 bis Fig. 18), geöffnet werden.

Die Abdeckung 6 reicht bei geschlossenem Dach 2 mit ihrer Vorderkante in etwa bis zur rückwärtigen Kante des hintersten Dachteils 4. Eine zusätzliche und ebenfalls bewegliche Hutablage zur Abdeckung auch des von hier aus nach vorne bis zum Beispiel zur Lehne einer hinteren Sitzbank oder einer ähnlichen Innenraumbegrenzung erstreckten Bereichs kann bei geschlossenem Dach 2 vorgesehen sein.

Um diesen Bereich bei geöffnetem und in die Karosserie 5 abgesenktem Dach 2 optisch überdecken zu können, ist der Abdeckung 6 eine bei geschlossenem Dach 2 verdeckt unterhalb dieser halterbare Erweiterung 7 zugeordnet, wobei diese Zuordnung nicht bedeutet, daß die Erweiterung 7 an die Abdeckung 6 angehängt ist.

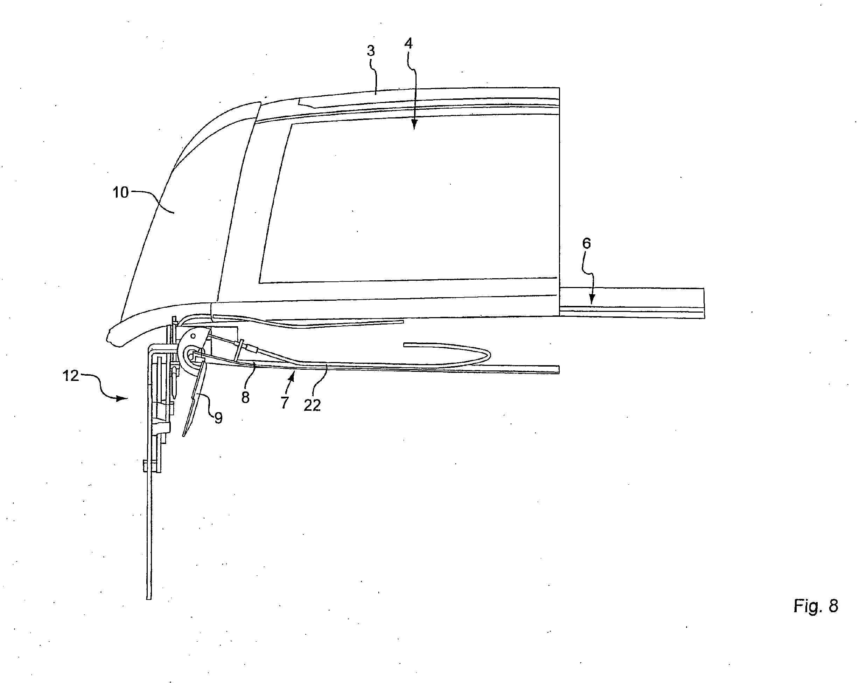

Die Erweiterung 7 ist hier von einem Leichtbauteil, beispielsweise aus Kunststoff oder einem metallischen Schaumwerkstoff, ausgebildet. Sie ist dabei mehrteilig ausgebildet und umfaßt einen in Fahrzeugquerrichtung mittleren Teil 8 und gegenüber diesem ein- und ausschwenkbare Seitenflügel 9. Diese ragen bei geschlossenem Dach 2 und geschlossener Abdeckung 6 im wesentlichen vertikal nach unten (Fig. 8) und liegen bei geöffnetem Dach und geschlossener Abdeckung 6 fluchtend neben dem Mittelteil 8. Dadurch kann von der Erweiterung 7 ein Raum überdeckt werden, der erheblich breiter ist als die Abdeckung 6. Die Oberfläche der Erweiterung 7 kann in Wagenfarbe lackiert und wetterfest sein und sich somit harmonisch an die Karosserie 5 und die Abdeckung 6 anpassen.

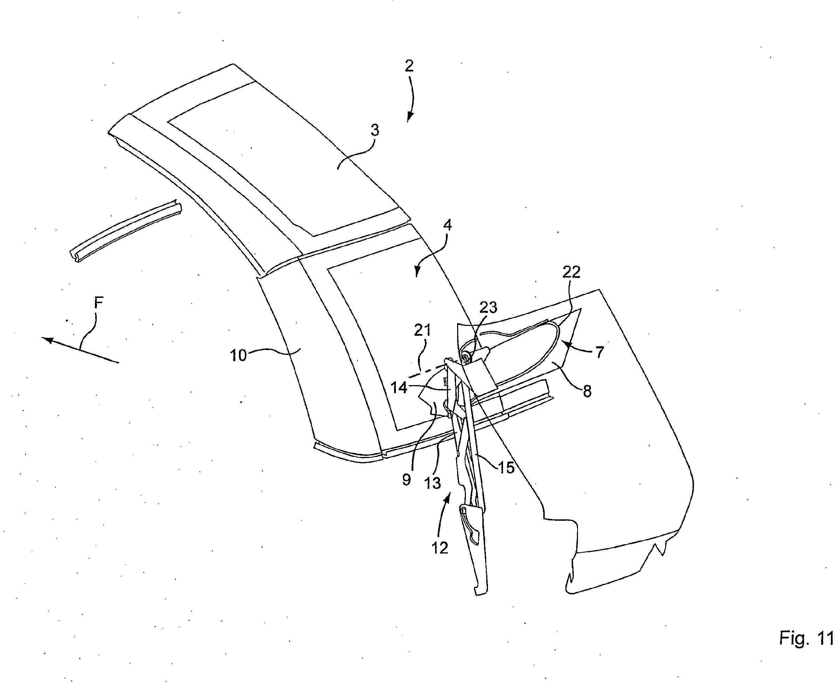

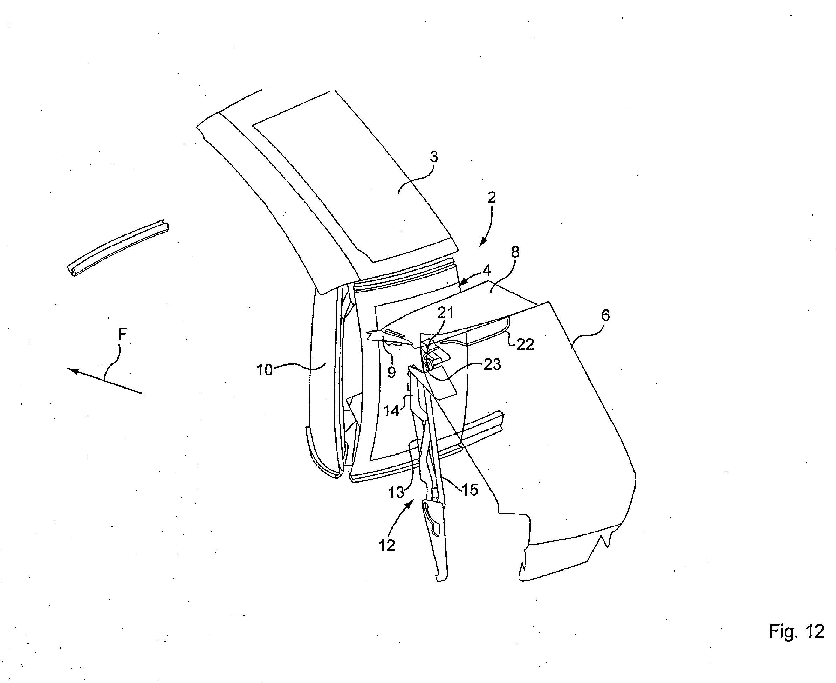

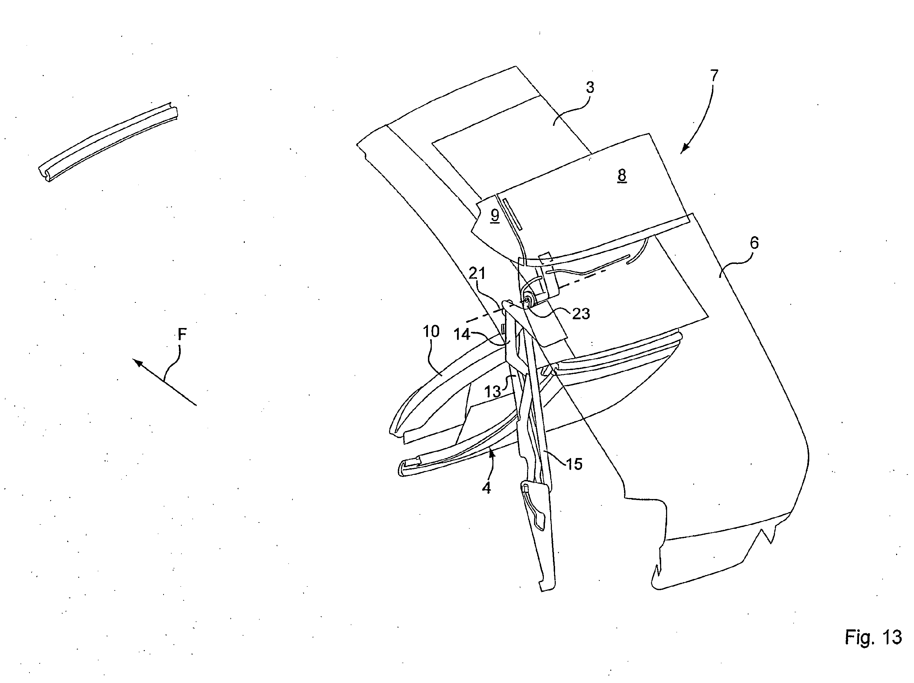

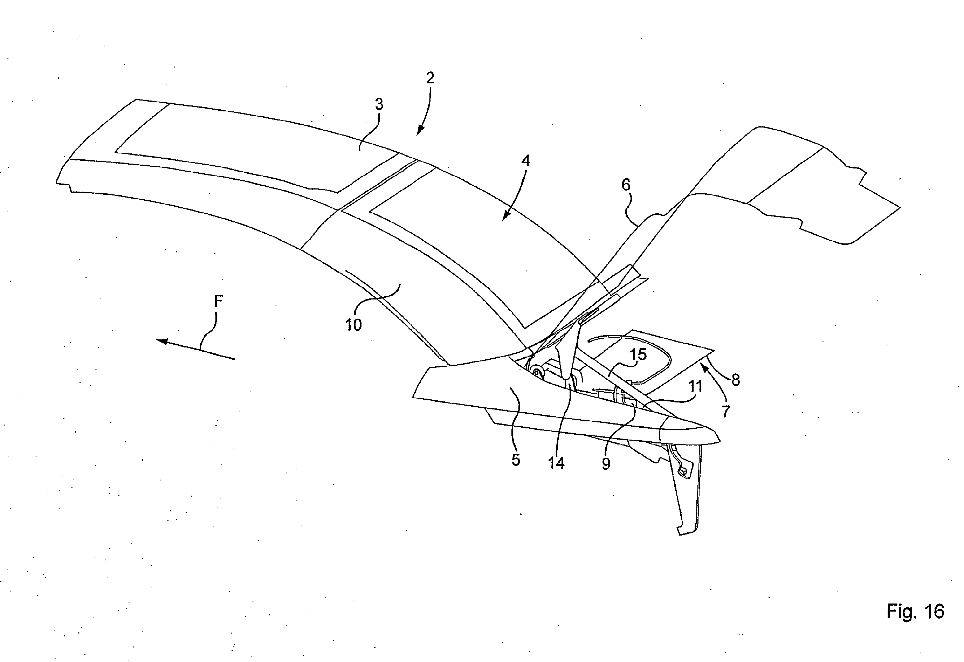

Die Abdeckung 6 kann selbst schmaler als die Erweiterung 7 ausgebildet sein, was bei einem Dach mit festen Dachteilen 3, 4 insbesondere dann ermöglicht ist, wenn der hinterste Dachteil 4 seitliche Säulen 10 umfaßt, häufig auch als C-Säulen bezeichnet, die während der Dachöffnung um parallel zu Seitenkanten des Rückfensters gelegene Achse nach innen einschwenken (Fig. 11 bis Fig. 13) und dadurch das Dach 2 insgesamt gegenüber seiner geschlossenen Version verschmälern. Wie zum Beispiel in Fig. 16 sichtbar ist, kann die Seitenfuge 11 zwischen Karosserie und Abdeckung 6 dann erheblich höher als bei üblichen Cabriolet-Fahrzeugen mit festen Dachteilen liegen, was neue und vorteilhafte Designmöglichkeiten eröffnet. Die Breite des geschlossenen hinteren Dachteils 4 kann dabei die Breite der Abdeckung 6 deutlich überragen. Daher ist auch die ausgeschwenkte Erweiterung 7 breiter als die Abdeckung 6.

Die Erweiterung 7 ist nicht unmittelbar mit der Abdeckung 6 verbunden, sondern an seitlichen Gestängen 12, die jeweils zur Bewegung der Abdeckung 6 Lenker 13, 14, 15 umfassen, gehalten. Diese werden je nach Öffnungssinn der Abdeckung unterschiedlich bewegt. Die Gestänge 12 können seitlich längs nach vorne stehende Schenkel eines in Draufsicht U-förmigen Hilfsrahmens bilden. Auch können sie eine Mehrgelenkanordnung mit zum Beispiel sieben oder mehr Gelenken bilden.

Exemplarisch ist im gezeichneten Ausführungsbeispiel ein Gestänge 12 mit einer Fünfgelenkausbildung dargestellt: Die Lenker 13, 15 sind an zwei karosseriefesten Gelenken 16, 17 schwenkbeweglich gehalten. An den Lenker 13 ist im Gelenk 18 der weitere Lenker 14 angelenkt, der wie der Lenker 15 an der Abdeckung 6 im Gelenk 19 bzw. 20 angreift.

Bei Öffnung der Abdeckung 6 zur Freigabe der Durchtrittsöffnung für das Dach (Fig. 3) ist sowohl beim Dachschließen als auch beim Dachöffnen das Gelenk 18 blockiert, so daß die Lenker 13 und 14 starr zueinander schwenken und insgesamt ein aktives Viergelenk 16, 17, 19, 20 gebildet ist.

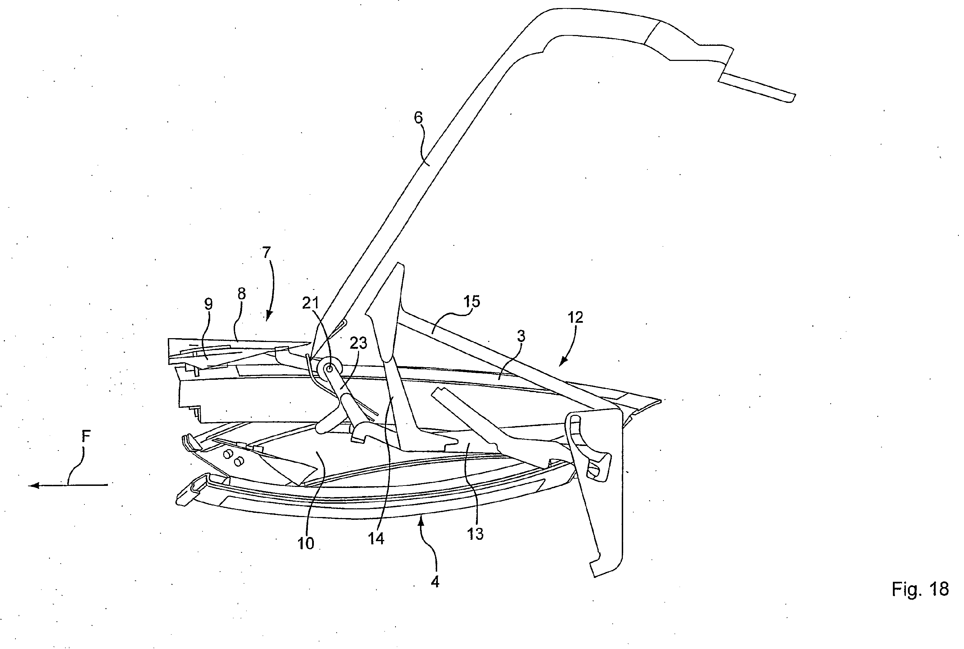

Bei gegensinniger Öffnung der Abdeckung zur Freigabe der Beladeöffnung für Gepäck ist ein anderes Gelenk, nämlich das Gelenk 16, blockiert, so daß der Lenker 13 in Ruhe verbleibt und nur der Lenker 14 am Gelenk 18 gegenüber diesem ausschwenkt. Somit ist hier insgesamt ein anderes aktives Viergelenk 17, 18, 19, 20 gebildet (Fig. 18).

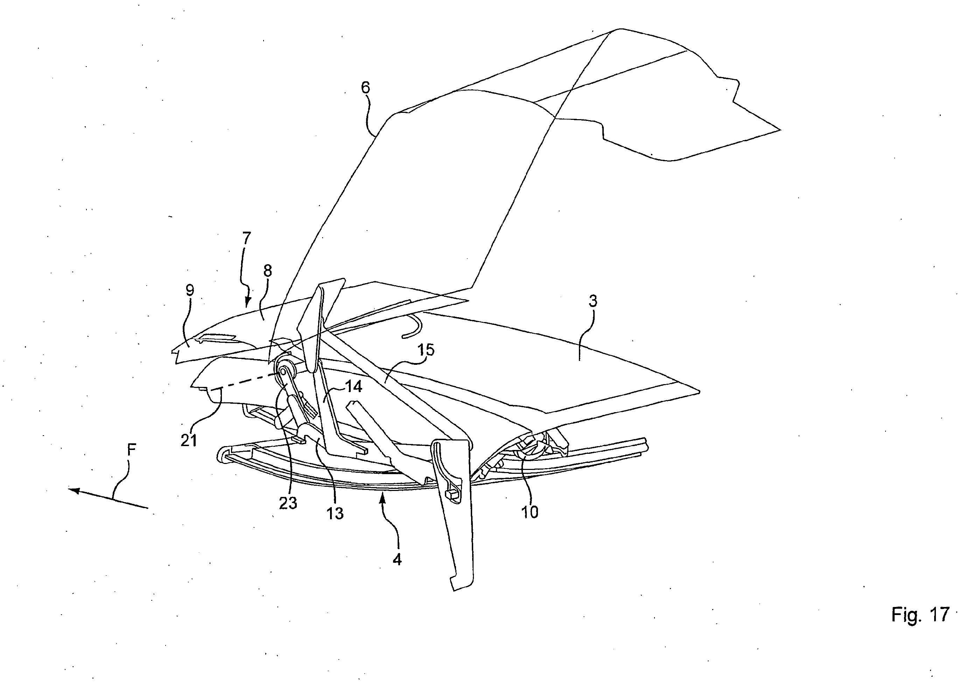

Die Erweiterung 7 ist um eine horizontale und quer zum Fahrzeug verlaufende Achse 21 gegenüber diesem Gestänge 12 schwenkbar. Die Achse 21 ist hierfür über einen Ausleger 23 mit dem Lenker 13 verbunden. Sofern dieser in Ruhe verbleibt (Öffnung des Kofferraums: Fig. 17, Fig. 18), bleibt daher auch die Achse 21 und damit die Erweiterung 7 unbewegt.

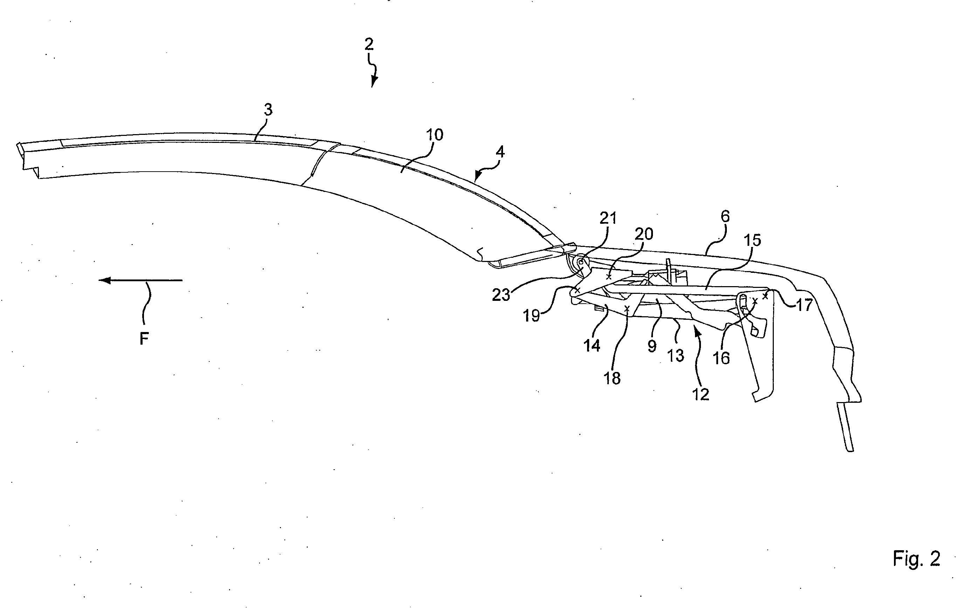

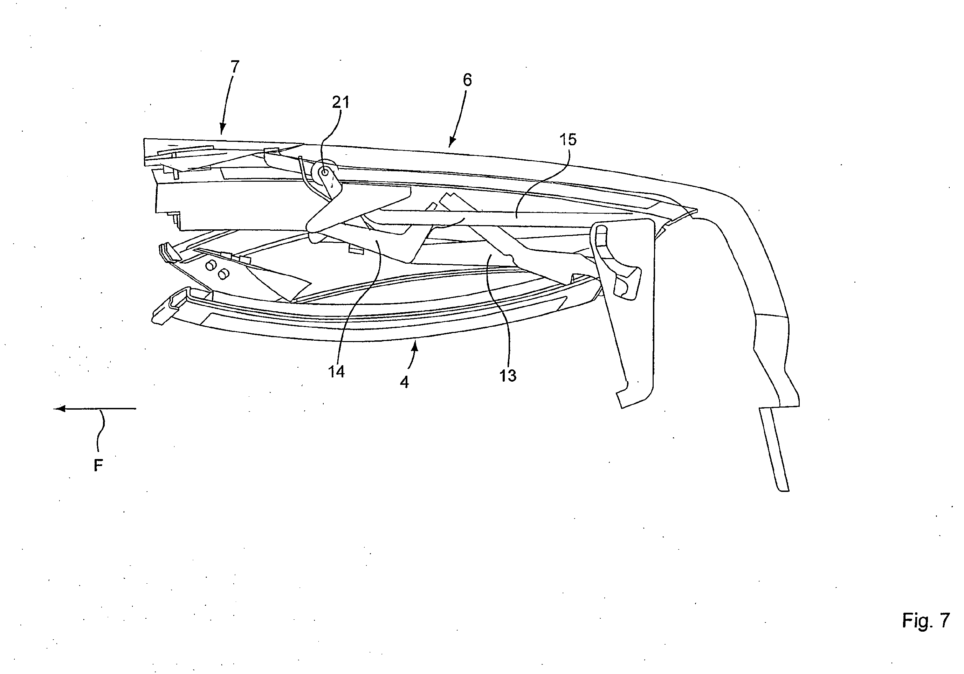

Bei geschlossenem Dach 2 und geschlossener Abdeckung 6 (Fig. 2) liegt die Erweiterung 7 eingeschwenkt und hier mit der Oberseite nach unten unter der Abdeckung 6 und wird beim Öffnen der Abdeckung 6 zur Freigabe der Durchtrittsöffnung für das Dach in gleichbleibender Relativposition mit der Abdeckung 6 mitbewegt (Fig. 3). Erst durch Öffnen des Daches 2 um die Achse 21 wird die Erweiterung 7 zum Beispiel über Bowdenzüge oder andere Kopplungsmittel ausgeschwenkt (Ablauf von Fig. 3 zu Fig. 7), wobei ein eigener Antrieb oder Steuerungsmittel entbehrlich sind.

Gleichzeitig oder je nach gewünschtem Ablauf zeitlich gering versetzt schwenken die Seitenteile 9, die in Ruhestellung nach unten weisen, um längs zum Fahrzeug liegende Achsen mit Hilfe des Bowdenzugs 22 gegen eine Federkraft aus. Für das Ein- oder Ausschwenken der Seitenteile 9 ist ebenfalls keinerlei zusätzlicher Antrieb oder Steuerungsaufwand erforderlich.

Entgegen der Zeichnung kann es je nach Ausbildung des Fahrzeugs 1, zum Beispiel zur Vermeidung sehr langer Bowdenzüge, auch sinnvoll sein, für das Ausschwenken der Erweiterung 7 und der Seitenteile 9 auch einen eigenen Antrieb, zum Beispiel einen Elektromotor oder hydraulischen Antrieb, vorzusehen, so daß dann zum Beispiel in der Stellung nach Fig. 3 bei geöffneter Abdeckung 6 und noch geschlossenem Dach 2 die Erweiterung ohne Dachbewegung bereits vollständig ausschwenken und die Seitenteile 9 gegenüber dem Mittelteil 8 ausklappen.

Am Ende der Dachöffnung ist in jedem Fall die Erweiterung 7 insgesamt durch ihr Angehängtsein an das Gestänge 12 mit der Abdeckung 6 zusammen geöffnet. Bei geöffnetem Dach 2 liegt die Erweiterung 7 dann nach dem Schließen der Abdekkung 6 in voller Breite fluchtend vor der Abdeckung 6.

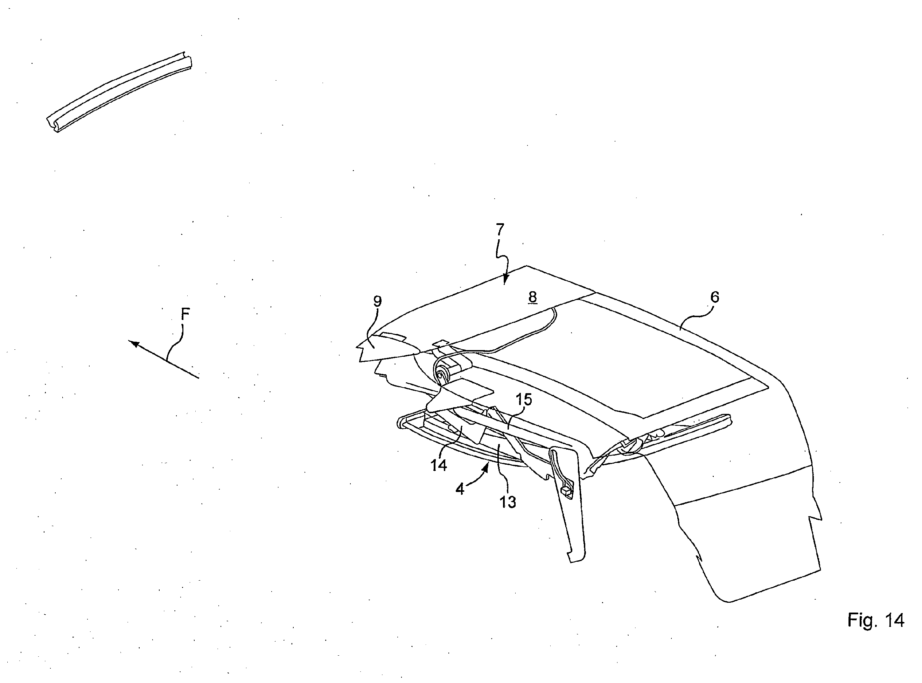

Aus dieser Stellung heraus kann die Abdeckung zur Freigabe einer Beladeöffnung geöffnet (Fig. 17) werden, ohne daß die Erweiterung mitbewegt wird. Vielmehr bleibt sie in ihrer im wesentlichen horizontalen, abdeckenden Stellung, die sie auch bei geschlossener Abdeckung einnimmt (Fig. 7, Fig. 14).

Ebenso kann bei geschlossenem Dach 2, wenn die Erweiterung 7 umgewendet unter der Abdeckung 6 liegt (Fig. 2), die Abdeckung 6 zur Freigabe des Kofferraums geöffnet werden (Fig. 15, Fig. 16), ohne daß die Erweiterung bewegt werden muß. Dies ist jedoch nicht zwingend. Hier wäre prinzipiell auch eine Mitbewegung der Erweiterung 7 mit eingeschwenkten Seitenteilen 9 möglich. Der Steuerungsaufwand ist so jedoch minimiert, die Erweiterung 7 folgt automatisch der Lage des Lenkers 13 der seitlichen Gestänge 12. Zudem ist auch hier nur ein geringerer Kraftaufwand nötig, da nur die Abdeckung 6 ohne die Erweiterung 7 geöffnet werden muß.

Ebenso ist auch nicht zwingend, daß die Erweiterung 7 in umgewendeter Stellung unter der Abdeckung 6 liegt. Die Erweiterung könnte auch in gegenüber ihrer fluchtend vor der Abdeckung 6 liegenden Stellung gleicher Orientierung verbleiben.

Es versteht sich, daß Dachform und Fahrzeuggröße verschieden ausgebildet sein können. So kann zum Beispiel das Cabriolet-Fahrzeug 1 sowohl ein Zweisitzer als auch ein Cabriolet-Fahrzeug mit einem größeren Innenraum und etwa zwei Sitzreihen hintereinander sein.

Die oben genannten Besonderheiten hinsichtlich der schmalen Abdeckung 6 und der gegenüber dieser breiteren Erweiterung 7 treten jedoch besonders bei festen Dachteilen 3, 4 mit eindrehbaren C-Säulen 10 auf, so daß hier die Erfindung noch einmal besondere Vorteile zeigt.

## Patentansprüche

1. Cabriolet-Fahrzeug (1) mit einem im rückwärtigen Fahrzeugbereich unterhalb einer beweglichen Abdeckung (6) ablegbaren Dach (2), wobei die Abdeckung in einem ersten Öffnungssinn zur Freigabe einer Durchtrittsöffnung für das Dach (2) und in einem zweiten Öffnungssinn zur Freigabe einer Beladeöffnung für Gepäck aufbeweglich ist und wobei der Abdeckung (6) eine gegenüber dieser bewegliche Erweiterung (7) zugeordnet ist, von der bei geöffnetem Dach (2) ein vor der Abdeckung (6) und hinter einem Insassenraum gelegener Bereich zumindest teilweise abdeckbar ist,
**dadurch gekennzeichnet,**
**daß** die Erweiterung (7) zumindest bei geöffnetem Dach (2) nur bei Öffnung der Abdeckung (6) zur Freigabe einer Durchtrittsöffnung für das Dach (2) mit der Abdeckung (6) beweglich ist.

2. Cabriolet-Fahrzeug (1) nach Anspruch 1,
**dadurch gekennzeichnet,**
**daß** die Erweiterung (7) an Teilen (13) eines seitlichen Gestänges (12) gehalten ist, die unterhalb der Abdeckung (6) angeordnet und zur Freigabe der Durchtrittsöffnung für das Dach mit der Abdeckung (6) beweglich sind und die zur Freigabe der Beladeöffnung für Gepäck in Ruhestellung verbleiben.

3. Cabriolet-Fahrzeug (1) nach einem der Ansprüche 1 oder 2,
**dadurch gekennzeichnet,**
**daß** die Gestänge (12) Bestandteil von Mehrgelenkanordnungen (16;17;18;19;20) sind.

4. Cabriolet-Fahrzeug (1) nach Anspruch 3,
**dadurch gekennzeichnet,**
**daß** in jedem Öffnungssinn jeweils zumindest ein Gelenk (16;18) blockiert ist.

5. Cabriolet-Fahrzeug (1) nach Anspruch 4,
**dadurch gekennzeichnet,**
**daß** je nach Öffnungssinn ein anderes Gelenk (16;18) blockiert ist.

6. Cabriolet-Fahrzeug (1) nach einem der Ansprüche 1 bis 5,
**dadurch gekennzeichnet,**
**daß** die Erweiterung (7) bezüglich der Fahrzeugquerrichtung einen mittleren Teil (8) und seitlich gelegene Außenteile (9) umfaßt, die bei geschlossenem Dach (2) gegenüber dem Mittelteil (8) in eine nach unten weisende Lagerstellung eingeklappt sind.

7. Cabriolet-Fahrzeug (1) nach Anspruch 6,
**dadurch gekennzeichnet,**
**daß** die Schwenkbewegung der Außenteile (9) bei Dachbewegung zwangsweise (22) ohne eigenen Antrieb bewirkbar ist.

8. Cabriolet-Fahrzeug (1) nach Anspruch 7,
**dadurch gekennzeichnet,**
**daß** die Außenteile (9) an dem Mittelteil (8) angelenkt und federbeaufschlagt gegenüber diesem einklappbar sind.

9. Cabriolet-Fahrzeug (1) nach einem der Ansprüche 1 bis 8,
**dadurch gekennzeichnet,**
**daß** das Dach (2) feste Dachteile (3;4) umfaßt und seitlich des Rückfensters gelegene Dachsäulen (10) während der Dachöffnung um zumindest im wesentlichen parallel zu den Seitenkanten des Rückfensters gelegene Achsen (6) einschwenkbar sind.

10. Cabriolet-Fahrzeug (1) nach einem der Ansprüche 1 bis 9,
**dadurch gekennzeichnet,**
**daß** die Erweiterung (7) an einem seitlichen Gestänge (12), von dem die Abdeckung (6) beweglich gehalten ist, abgestützt ist.

## Claims

1. A convertible vehicle (1) comprising a roof (2) which can be stowed at the rear of the vehicle, below a movable cover (6), which cover can be moved up in a first opening direction to uncover a passage opening for the roof (2) and in a second opening direction to uncover a loading opening for luggage, an extension (7) being assigned to the cover (6), which extension (7) is movable with respect to the cover (6) and by which an area located in front of the cover (6) and behind a passenger compartment can be covered, at least partially, when the roof (2) is open, **characterised in that** the extension (7) can be moved with the cover (6), at least when the roof (2) is open, only when the cover (6) is open to uncover a passage opening for the roof (2).

2. The convertible vehicle (1) according to claim 1, **characterised in that** the extension (7) is held at parts (13) of a lateral linkage (12) which are arranged below the cover (6) and are movable with the cover (6) to uncover the passage opening for the roof and which remain in their resting position to uncover the loading opening for luggage.

3. The convertible vehicle (1) according to any one of claims 1 or 2, **characterised in that** the linkages (12) are part of multi-joint assemblies (16; 17; 18; 19; 20).

4. The convertible vehicle (1) according to claim 3, **characterised in that** at least one joint (16; 18) is blocked in each opening direction.

5. The convertible vehicle (1) according to claim 4, **characterised in that** another joint (16; 18) is blocked according to the opening direction.

6. The convertible vehicle (1) according to any one of claims 1 to 5, **characterised in that**, with respect to the transverse direction of the vehicle, the extension (7) comprises a central part (8) and laterally located outer parts (9), which are folded in with respect to the central part (8), into a downward facing stowage position, when the roof (2) is closed.

7. The convertible vehicle (1) according to claim 6, **characterised in that** the pivoting movement of the outer parts (9) can be enforced (22), without a separate drive, by moving the roof.

8. The convertible vehicle (1) according to claim 7, **characterised in that** the outer parts (9) are articulated to the central part (8) and can be folded in with respect to the latter by spring action.

9. The convertible vehicle (1) according to any one of claims 1 to 8, **characterised in that** the roof (2) comprises fixed roof parts (3; 4), and **in that** roof pillars (10), located laterally of the rear window, can be swivelled in, when opening the roof, around axes (6) which are at least substantially parallel to the lateral edges of the rear window.

10. The convertible vehicle (1) according to any one of claims 1 to 9, **characterised in that** the extension (7) is supported by a lateral linkage (12) by which the cover (6) is held in a movable manner.

## Revendications

1. Véhicule cabriolet (1) comportant un toit (2) que l'on peut ranger à l'arrière dudit véhicule, au-dessous d'un couvercle (6) qui est déplaçable vers la haute dans un premier sens d'ouverture afin de découvrir une ouverture de passage pour le toit (2) et dans un deuxième sens d'ouverture afin de découvrir une ouverture de chargement de bagages, une extension (7) étant associée avec le couvercle (6), cette extension (7) étant déplaçable par rapport au couvercle (6) et permettant de recouvrir au moins partiellement une région située devant le couvercle (6) et derrière un habitacle, lorsque le toit (2) est ouvert, **caractérisé en ce qu'**au moins lors de l'ouverture du toit (2), ladite extension (7) n'est déplaçable avec le couvercle (6) que lors de l'ouverture du couvercle (6) afin de découvrir une ouverture de passage pour le toit (2).

2. Véhicule cabriolet (1) selon la revendication 1, **caractérisé en ce que** l'extension (7) est tenue à des pièces (13) d'une tringlérie latérale (12) qui sont disposées au-dessous du couvercle (6) et sont déplaçables avec le couvercle (6) afin de découvrir l'ouverture de passage pour le toit et qui restent dans leur position de repos afin de découvrir l'ouverture de chargement de bagages.

3. Véhicule cabriolet (1) selon l'une quelconque des revendications 1 ou 2, **caractérisé en ce que** les tringléries (12) font partie d'ensembles à plusieurs articulations (16; 17; 18; 19; 20).

4. Véhicule cabriolet (1) selon la revendication 3, **caractérisé en ce qu'**au moins une articulation (16; 18) est bloquée dans chaque sens d'ouverture.

5. Véhicule cabriolet (1) selon la revendication 4, **caractérisé en ce que**, selon le sens d'ouverture, une autre articulation (16; 18) est bloquée.

6. Véhicule cabriolet (1) selon l'une quelconque des revendications 1 à 5, **caractérisé en ce que** l'extension (7) comporte, par rapport à la direction transversale du véhicule, une partie centrale (8) et des parties extérieures (9) latérales, qui sont rabattues vers l'intérieur par rapport à la partie centrale (8), dans une position de logement orientée vers le bas, lorsque le toit (2) est fermé.

7. Véhicule cabriolet (1) selon la revendication 6, **caractérisé en ce que** le pivotement des parties extérieures (9) peut être forcé (22), sans un entraînement propre, par déplacement du toit.

8. Véhicule cabriolet (1) selon la revendication 7, **caractérisé en ce que** les parties extérieures (9) sont articulées à la partie centrale (8) et peuvent être rabattues vers l'intérieur, par rapport à cette dernière, sous l'action d'un ressort.

9. Véhicule cabriolet (1) selon l'une quelconque des revendications 1 à 8, **caractérisé en ce que** le toit (2) comporte des parties de toit fixes (3;4) et **en ce que** des montants de toit (10), situés latéralement par rapport à la lunette arrière, peuvent pivoter vers l'intérieur lors de l'ouverture du toit, autour des axes (6) qui sont disposés de manière au moins sensiblement parallèle aux bords latéraux de la lunette arrière.

10. Véhicule cabriolet (1) selon l'une quelconque des revendications 1 à 9, **caractérisé en ce que** l'extension (7) est supportée par une tringlérie latérale (12) par laquelle le couvercle (6) est tenu de manière déplaçable.
